# EUROPEAN PATENT SPECIFICATION

(11) **EP 1 093 549 B1**
(45) Date of publication and mention of the grant of the patent: **05.03.2003**
(21) Application number: 98913771.6
(22) Date of filing: 07.04.1998
(51) Int. Cl.: F16H 3/72

(54) **A DEVICE FOR TRANSMITTING OF ROTATION MOMENT**
VORRICHTUNG ZUR ÜBERTRAGUNG EINER DREHBEWEGUNG
DISPOSITIF DE TRANSMISSION D'UN MOMENT DE ROTATION

(43) Date of publication of application: 25.04.2001
(73) Proprietor: Jetromatic Development Plan Oy, 35700 Vilppula (FI)
(72) Inventor: MAJALAHTI, Pekka, FIN-35990 Kolho (FI); MAJALAHTI, Taimo, FIN-35700 Vilppula (FI); MAJALAHTI, Veli, FIN-35700 Vilppula (FI)
(74) Representative: Nieminen, Taisto Tapani
(86) International application number: FI9800304
(87) International publication number: WO99051892

(56) References cited:
- WO-A1-96/32597
- DE-A1- 19 512 381
- US-A- 3 534 631
- US-A- 3 866 490

## Description

The invention relates to an equipment for transmission of rotative power according to the introduction of patent claim 1 and as known from WO96/32597.

Especially in case of complicated power transmissions, like gearboxes, the problem is that the equipment gets expensive, since they have to be dimensioned to endure transmission even of big loads. By means of solutions using a differential the transmission power can be divided into two, but with known solutions it is, however, not possible to alter and regulate transmission power. A solution of such a differential is presented in US patent specification 5 259 823. By means of an equipment as per the above specification, power is fed by a differential and by a gear drive to separate ends of the output power shaft. The separate ends of the output power shaft are connected with a mechanism, by means of which the shaft ends can rotate individually or together. By means of the equipment it is, indeed, possible to distribute transmission power to separate shaft ends, but neither the power nor the torque can be regulated.

The target of this invention is to achieve for power transmission an equipment that allows stepless alteration of the gear ratio between the input power shaft and the output power shaft and alteration of torque transmitted to the output power shaft, when power transmitted over the gearbox can be reduced. Furthermore, as an essential part, the invention comprises the function to recover braking power, needed for the regulation the gear ratio, and to transmit it to practical use, e.g. as rotative power for the output power shaft.

The equipment as per this invention is characterized in what is presented in the patent claims.

The invention is disclosed in the enclosed drawing, where
Fig.1 shows one embodiment of the invention in profile
Fig.2 shows another embodiment of the invention in profile

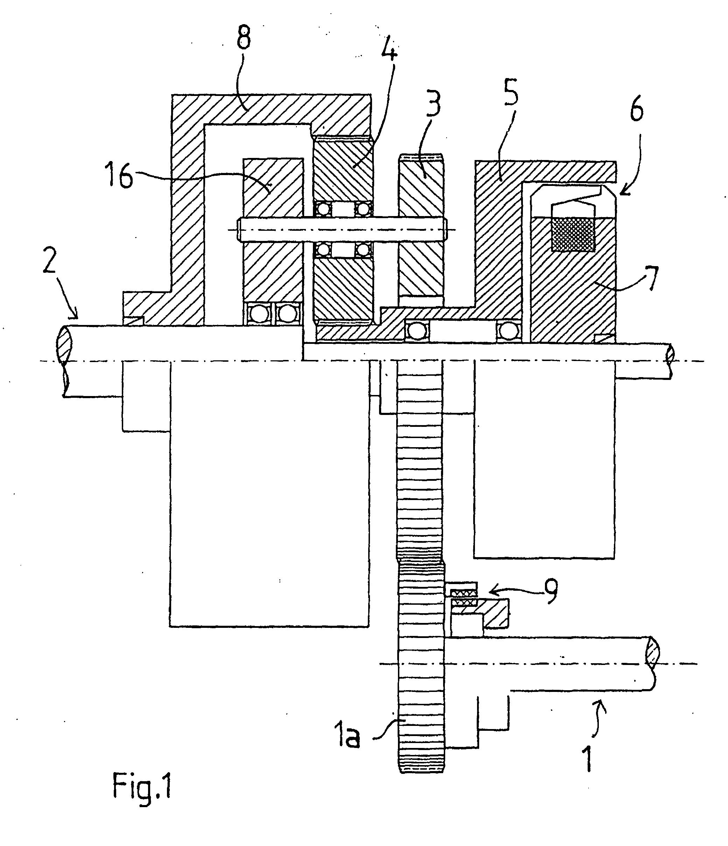

Figure 1 is the equipment with input power shaft 1 witch has a cogwheel 1a. Gear ring 3 is rotated by cogwheel 1a. On gear ring 3 there are several fixed shafts equally distributed and reaching support ring 16 which is fastened with bearings to revolve upon output power shaft 2. On the axles differentials 4 are fastened with bearings and transmitting rotative motion partly to wheel 8 which has a gear ring and partly to wheel 5. Wheel 8 is fixed on the output power shaft 2 and wheel 5 is fastened with bearings to revolve in with respect to the output power shaft 2.

Power is distributed from the differential 4 partly direct over wheel 8 as power to rotate the output power shaft 2 and partly to wheel 5. To wheel 5 a much smaller torque is distributed. The torque is distributed in proportion to the diameters of the gear rings of wheels 8 and 5. Then even the slightest braking torque of wheel 5 will regulate the gear ratio and essentially distribute the major portion of the torque from differential 4 over wheel 8 to shaft 2.

Wheel 5 is slowed down in order to accomplish regulation gear ratio as well as to maintain gear ratio. Suited for braking are devices generating electricity, like generators, devices generating pressure, like air pumps and fluid pumps, or devices generating friction heat. As per the invention braking energy is made use of. An advantageous application is to use that energy for rotation of the output power shaft 2. In the example as per figure 1 a motor is presented, which is fast running, whereby it is placed to transfer rotative power to the input power shaft 1. The major portion of braking energy is even in this case gained to advantage and finally steered to rotate the output power shaft.

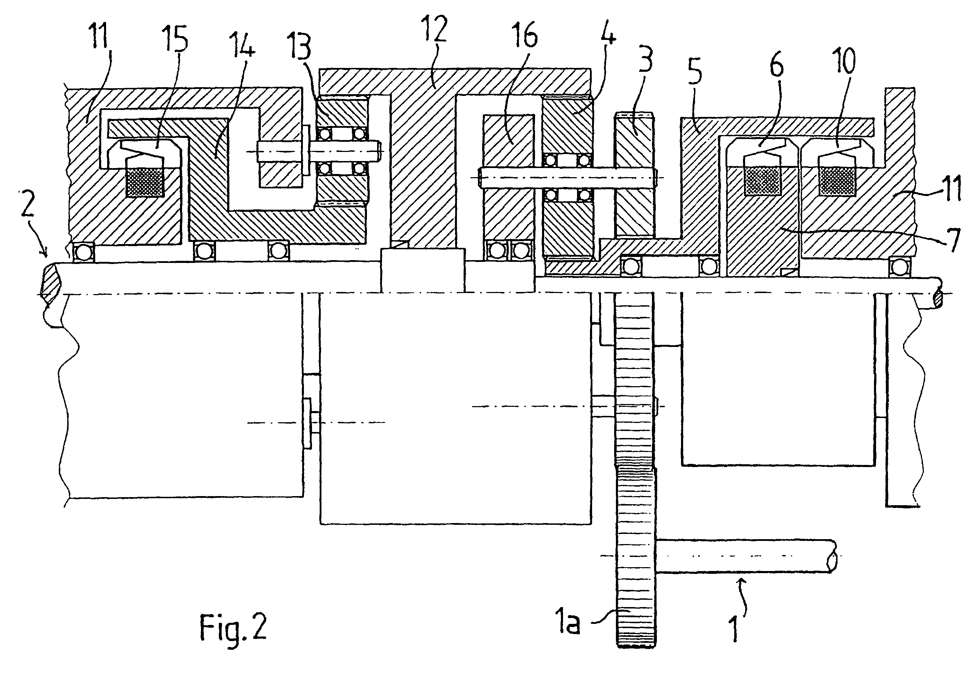

In figure 2 a similar solution is presented, from input power shaft 1 to differential 4, out of which ones power is still distributed either to wheel 12 or 5. The difference of the solution is that braking energy recovered from between wheels 5 and 7 is transmitted to rotate the output power shaft 2 and yet over the reduction gear 14,13, in order to get a big torque especially at low speeds of revolution of output power shaft 2.

In figure 2 a non-rotating gearbox body is shown under reference number 11. Motor 15, producing additional torque to output power shaft 2, is either an electric motor or a mediumdriven motor. Most conveniently, the mediumdriven motor is a hydraulic motor, whereat there is, correspondingly, as switching device a hydraulic pump to produce braking energy.

Gear ratio arises through the coupling device or by the difference in rotative velocity it has produced between wheels 5 and 7. Great difference in rotative velocity means great gear ratio. When the difference in velocity is reducing, the gear ratio is approaching 1:1. If wheels 5 and 7 are interlocked, the equipment revolves as a complete unit upon shaft 2.

If, instead of the equipment, the coupling device 6 is a rotative motor revolving wheel 5 in the same direction as the rotation of gear ring 3 and faster than wheel 7 that rotates in the same direction, the gearbox turns into an overdrive gear.

It is also possible to make the gearbox turn the direction of rotation of shaft 2, when coupling device 6 has the qualities of a motor, whereby it rotates wheel 5 in different direction than the gear ring 3 rotation, and further, the direction of rotation of motor 15 (figure 2) is turned in order to make it revolve wheel 14 in opposite direction than required by shaft 2.

It is advantageous to use a generator as coupling device, since electric energy gained by it can also be stored in batteries, and used, if necessary, especially in vehicles, controllably as additional energy for electric motor 9,15. If coupling device 6 is a generator, the other generator 10 in figure 2 is, for instance, an exciting current generator.

By means of the presented gearbox stepless gear ratio is achieved, where the rotative power is so distributed that regulation is carried out substantially from the side of the smaller branched rotative power, whereby the regulating energy is small. Further, regulation is transmitted to practical use either to the outside of equipment or to rotate by alternative means the output power shaft or any other shaft of the equipment.

## Claims

1. An equipment for transmission of rotative speed and rotative power, in which equipment there is an input shaft (1) and an output shaft (2) of rotative power, between which a different-ial (4) with at least a first and a second rotational power outlets (5,8); (5,12) and of several transmission gears is fitted, said outlets being made of wheels (5, 8; 5, 12) each having a gear ring and being able to rotate at different speeds with respect to one another, while both outlets are engaged to transmit rotative power to the output power shaft (2) so that the first rotative power outlet (5) is engaged to affect the output power shaft (2) over a separate coupling device (6, 7), which is formed as a generator, **characterized in that** the energy developed by said generator can be transmitted by means of an electrical motor (9; 15) to rotate the output power shaft (2) in the same direction as the wheel (8; 12) of the second power outlet.

2. An equipment according to claim 1 **characterized in that** there is between said motor (15) and said output power shaft (2) a reduction gear (13).

3. An equipment according to claim 1 **characterized in that** the wheel (8, 12) connected to said second power outlet of differential (4) is engaged to rotate the output power shaft (2) directly.

4. An equipment according to claim 1 **characterized in that** the gear rings of said wheels (5) and (8) connected to the first and second power outlet of the differential (4) are differently dimensioned with respect to one another.

## Patentansprüche

1. Eine Einrichtung zur Übertragung von Laufgeschwindigkeit und Drehkraft, wobei die Einrichtung eine Antriebswelle (1) und eine Abtriebswelle (2) der Drehkraft hat, und wo zwischen diesen Wellen ein Differential (4) angebracht worden ist, der wenigstens einen ersten und einen zweiten Auslass (5,8);(5,12) der Drehkraft hat und aus mehreren Übertragungsrädern besteht, wobei die genannten Auslässe aus Rädern (5,8;5,12) zusammen gesetzt sind, je mit einem Ring versehen, und mit verschiedener Geschwindigkeit unter sich drehen können, indem die Auslässe zur Übertragung der Drehkraft auf die Abtriebswelle (2) in der Weise geschaltet ist, dass der erste Auslass (5) der Drehkraft mit Wirkung auf die Abtriebswelle (2) geschaltet ist, und zwar über einen gesonderten Kuppler (6,7), der als ein Generator geformt worden ist, **gekennzeichnet dadurch, dass** vom genannten Generator entwickelte Energie mit Hilfe eines elektrischen Motors (9:15) zur Drehung der Abtriebswelle (2 ) in gleicher Richtung übertragen werden kann wie das Rad (8;12) des zweiten Auslasses der Drehkraft .

2. Eine Einrichtung gemäss Patentanspruch 1 **gekennzeichnet dadurch, dass** es zwischen dem genannten Motor (15) und der genannten Abtriebswelle (2) ein Reduktionsgetriebe (13) gibt.

3. Eine Einrichtung gemäss Patentanspruch 1 **gekennzeichnet dadurch, dass** das mit dem genannten zweiten Auslass des Differentials (4) verbundene Rad (8,12) direkt zur Drehung der Abtriebswelle (2) geschaltet worden ist.

4. Eine Einrichtung gemäss Patentanspruch 1 **gekennzeichnet dadurch, dass** die mit dem ersten und dem zweiten Auslass der Drehkraft des Differentials (4) verbundenen Zahnräder (5) und (8) unter einander in verschiedene Größen dimensioniert worden sind.

## Revendications

1. Un équipement pour la transmission d'une vitesse de rotation et d'une puissance de rotation dans lequel équipement il y a un arbre d'entrée (1) et un arbre de sortie (2) pour la puissance de rotation avec, monté entre ceux-ci, un différentiel (4) comprenant au moins deux sorties, une première et une seconde, pour la puissance de rotation (5, 8); (5, 12) et fait de plusieurs roues de transmission, lesdites sorties étant faites de roues (5, 8; 5, 12) dont chacune munie d'un anneau denté et capable de tourner à des vitesses différentes l'une par rapport à l'autre, tandis que les deux sorties sont enclenchées pour transmettre la puissance de rotation vers l'arbre de sortie (2) de façon à ce que la première sortie de puissance de rotation (5) s'enclence pour agir sur l'arbre de sortie (2) via un moyen de couplage à part (6, 7) constituant une génératrice, **caractérisé en ce que** l'énergie développée par ladite génératrice peut être transmise au moyen d'un moteur électrique (9, 15) pour tourner l'arbre de sortie (2) dans la même direction que la roue (8, 12) de la seconde sortie de puissance.

2. Un équipement selon la revendication 1, **caractérisé en ce que**, entre ledit moteur (15) et ledit arbre de sortie de puissance (2), il y a un engranage de réduction (13).

3. Un équipement selon la revendication 1, **caractérisé en ce que** la roue (8, 12) reliée à ladite seconde sortie de puissance du différentiel (4) s'enclence de façon à faire directement tourner l'arbre de sortie (2).

4. Un équipement selon la revendication 1, **caractérisé en ce que** les anneaux dentés desdites roues (5) et (8) reliés à la première et à la seconde sortie de puissance du différentiel (4) sont de dimensions différentes l'un par rapport à l'autre.
